# EUROPEAN PATENT APPLICATION

(11) **EP 4 570 213 A1**
(43) Date of publication of application: **18.06.2025**
(21) Application number: 23215418.7
(22) Date of filing: 11.12.2023
(51) Int. Cl.: A61C 17/02, A61C 17/028, A61C 17/22, A61C 15/04

(54) **HEAD COMPONENT FOR AN ORAL HYGIENE PRODUCT**

(71) Applicant: Koninklijke Philips N.V., 5656 AG Eindhoven (NL)
(72) Inventor: BOURQUIN, Yannyk Parulian Julian, Eindhoven (NL); VISSER, Cornelis Gerardus, Eindhoven (NL); LIPSCH, Job, Eindhoven (NL); DE VREEDE, Jasper, Eindhoven (NL)
(74) Representative: Philips Intellectual Property & Standards

(57) **Abstract**

Proposed are schemes, solutions, concepts, designs, methods, and systems pertaining to aiding and/or improving a head for an oral hygiene product for cleaning teeth by emitting a cleaning fluid. In particular, embodiments provide a head component with two nozzles for emitting cleaning fluid. The operating parameters of the first of the two nozzles may be adjusted independently to the operating parameters of the second of the two nozzles, allowing for independent control of the bursts of cleaning fluid emitted from each nozzle.

## Description

### FIELD OF THE INVENTION

The present invention relates to the field of oral hygiene products, and more particularly to a head component for an oral hygiene product.

### BACKGROUND OF THE INVENTION

Many oral hygiene products employ fluid flossing functionalities for cleaning interdental spaces between the teeth of the user. Interdental cleaning is one of the most important aspects of cleaning to maintain healthy teeth and gums. Known examples of interdental cleaners include oral irrigators or water flossers, in which jets of cleaning fluid are directed into the interdental space of a user for cleaning.

However, in oral irrigators the cleaning jet is typically limited to a narrow line of cleaning, especially when the jet of cleaning fluid is chosen to be small to limit total fluid use. For interdental cleaning, such a narrow cleaning line reduces efficacy when compared to conventional string flossing (because the small jet of cleaning fluid only cleans a middle part of the user's teeth, and not tooth contact points and/or subgingivally where string floss can reach).

Additionally, the narrow jet of known oral irrigators may typically require long application times as the user passes the oral irrigator over all sides of the teeth to obtain good coverage.

### SUMMARY OF THE INVENTION

The invention is defined by the claims.

According to examples in accordance with an aspect of the invention, there is provided a head component for an oral hygiene product for cleaning teeth of a user by emitting a cleaning fluid, wherein the head component comprises:
a support structure;
a first nozzle coupled to the support structure, the first nozzle configured, in use, to emit a first burst of cleaning fluid to the teeth of the user; and
a second nozzle coupled to the support structure, the second nozzle configured, in use, to emit a second burst of cleaning fluid to the teeth of the user,
wherein the head component is adapted to permit adjustment of a first set of operating parameters of the first nozzle and a second set of operating parameters of the second nozzle to independently control the first burst of cleaning fluid and the second burst of cleaning fluid.

Proposed are schemes, solutions, concepts, designs, methods, and systems pertaining to aiding and/or improving a head for an oral hygiene product for cleaning teeth by emitting a cleaning fluid. In particular, embodiments provide a head component with two nozzles for emitting cleaning fluid. The operating parameters of the first of the two nozzles may be adjusted independently to the operating parameters of the second of the two nozzles, allowing for independent control of the bursts of cleaning fluid emitted from each nozzle.

In other words, a head component is proposed with two nozzles. By adjusting various operating parameters of the nozzles, the emission of cleaning fluid from each nozzle can be controlled independently. The presence of two independently adjustable nozzles may result in reduced cleaning times, as a greater surface area of the teeth and gums of the user may be cleaned simultaneously, and improved cleaning performance.

By way of example, adjusting the operating parameters of the first and second nozzles may allow for control over whether or not the first burst of cleaning fluid from the first nozzle collides with the second burst of cleaning fluid from the second nozzle. This control may be beneficial since the splashing effect caused by such a collision may improve cleaning in some instances but hamper it in others. When the nozzles are directed towards a narrow interdental space, a collision between bursts of cleaning fluid may be detrimental to cleaning if the build-up of fluid in the interdental space is too great. In other instances, the splashing effect caused by the collision may increase the surface area that is reached by the cleaning fluid. The proposed arrangement in which parameters of the two nozzles may be adjusted independently of one another, allows control over whether or not such a collision occurs and therefore permits adjustment to the operation of the device to achieve the best cleaning performance.

If a collision does occur between the first burst of cleaning fluid from the first nozzle and the second burst of cleaning fluid from the second nozzle, further independent adjustment of the operating parameters of the first and second nozzles may allow for the position of the point at which the two bursts collide to be controlled. Movement of the position of the collision point allows for different areas of the teeth and gums of the user to be targeted for focused cleaning. The proposed invention therefore may provide a more thorough clean of the entire teeth, gums, and interdental space.

Independent (i.e., separate or individual) adjustment of the operating parameters of two nozzles configured to emit cleaning fluid to the teeth of the user may allow for configurations that result in improved cleaning surface coverage and a reduction of the total time for cleaning. The area targeted by the two jets of cleaning fluid associated with the two nozzles may be tailored to the geometry of the mouth of the user. The proposed invention permits the nozzles to work cooperatively on the same area of the user's teeth and gums, or individually on separate areas, depending on the needs of the user, to improve cleaning efficiency and thoroughness. By way of example, the nozzles of the proposed invention may be controlled to operate with a set jetting sequence in which the operating parameters of the two nozzles are adjusted in a temporal sequence. The resulting sequence of different cleaning burst configurations may efficiently clean all surfaces of the user's teeth and the interdental space.

An improved head component for an oral hygiene product for cleaning teeth of a user by emitting a cleaning fluid may thus be supported by the proposed concept(s).

In some embodiments, the first nozzle may be configured, in use, to emit the first burst of cleaning fluid along a first axis and the second nozzle may be configured, in use, to emit the second burst of cleaning fluid along a second axis. Further, the first and second axes may be configured to intersect so that, in use, the first burst of cleaning fluid and the second burst of cleaning fluid collide at a collision point. Collisions between the two bursts of cleaning fluid may result in a splashing effect that improves cleaning performance.

In some embodiments, independently controlling the first burst of cleaning fluid and the second burst of cleaning fluid may comprise adjusting the first and second sets of operating parameters to control the position of the collision point. This may allow for improved personalisation of cleaning to the shape of the user's mouth and may also allow for different areas of the teeth of the user to be targeted for cleaning.

In some embodiments, independently controlling the first burst of cleaning fluid and the second burst of cleaning fluid may comprise adjusting the first and second sets of operating parameters so that the first and second burst of cleaning fluid do not collide. In some instances, for example when the two jets are aimed at the interdental space of the user and the interdental space is narrow, collision between the two jets may be detrimental to the cleaning efficacy of the bursts of cleaning fluid. In this case, it is beneficial to be able to prevent collision between the two bursts of cleaning fluid.

In some embodiments, the first nozzle may be configured, in use, to emit the first burst of cleaning fluid along a first axis. The first set of operating parameters may then comprise at least one of: the orientation of the first axis; a first time period being the time period over which the first burst of cleaning fluid occurs; a first nozzle pressure being the fluid pressure associated with the first burst of cleaning fluid; and a first fluid velocity being the velocity at which the first burst of cleaning fluid is emitted. Each of these parameters control characteristics of the first burst of cleaning fluid and their adjustment may enable adjustments to the cleaning performance of the head component.

Similarly, in some embodiments, the second nozzle may be configured, in use to emit the second burst of cleaning fluid along a second axis. The second set of operating parameters may then comprise at least one of: the orientation of the second axis; a second time period being the time period over which the second burst of cleaning fluid occurs; a second nozzle pressure being the fluid pressure associated with the second burst of cleaning fluid; and a second fluid velocity at which the second burst of cleaning fluid is emitted.

In some embodiments, the first nozzle and the second nozzle may be arranged on opposite sides of a central axis of the head component. Further, the first nozzle and the second nozzle may be arranged in a U- or C- shaped configuration so that, in use, the first nozzle and the second nozzle are adapted to be positioned on either side of the user's teeth. This is an ergonomic configuration that allows for two surfaces of the teeth to be cleaned at once when the head component is in use.

In some embodiments, the first nozzle and the second nozzle may be flexible to permit adjustment of their positions. In this way, the directions in which the first and second bursts of cleaning fluid may be emitted can be modified by adjusting the position of the nozzles.

In some embodiments, the head component may further comprise at least one of: a first actuator configured to adjust a first operating parameter of the first set of operating parameters; and a second actuator configured to adjust a second operating parameter of the second set of operating parameters. Preferably, the first and second operating parameters comprise at least one of: a position; an orientation; and a diameter of a fluid outlet located at the end of the first and second nozzles respectively. The provision of actuators may allow for automatic adjustment to the operating parameters of the first and second nozzles, allowing for automatic control over the first and second burst of cleaning fluid. This may remove the need for manual adjustment by the user.

In some embodiments, the head components may further comprise a floss wire. In the case where the head component is adapted for use in an oral irrigator, the presence of the floss wire may further improve interdental cleaning performance and allow for easier positioning of the head component within the user's mouth.

According to another aspect of the present invention, there is provided an oral hygiene product for cleaning teeth comprising a head component according to any proposed embodiment.

The oral hygiene product may in some embodiments further comprise: a cleaning fluid reservoir; and a pump arrangement configured to pump cleaning fluid from the fluid reservoir to the first and second nozzles of the head component. This enables fluid to be stored in the device and then pumped to the nozzles for emission to the teeth, resulting in a compact and functional handheld oral hygiene device.

In some embodiments, the pump arrangement of the oral hygiene product may comprise: a first pump to pump cleaning fluid to the first nozzle; and a second pump to pump cleaning fluid to the second nozzle. This may allow for the properties such as the amount of fluid in the first and second burst of cleaning fluid, the respective fluid pressures, and the time periods over which the first and second burst of cleaning fluids occur to be controlled independently.

In other embodiments, the pump arrangement of the oral hygiene product may comprise: a pump; a Y-junction connected to the pump at one arm, the first nozzle at a second arm, and a second nozzle at a third arm; and a controllable valve permitting control of the flow of the cleaning fluid down the second arm and the third arm of the Y-junction. Similarly, this pump arrangement may allow easier independent control over the first burst of cleaning fluid and the second burst of cleaning fluid.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a simplified schematic block diagram of an oral irrigator according to a proposed embodiment (viewed from the side);
Fig. 2 shows the head of the oral irrigator of Fig. 1 (viewed from above, i.e. a top view);
Fig. 3 shows the head of the oral irrigator wherein the orientations of the first and second axes have been adjusted to control the position of the collision point;
Fig. 4 shows the head of the oral irrigator wherein the orientations of the first and second axes have been adjusted such that the first burst of cleaning fluid and the second burst of cleaning fluid do not collide;
Fig. 5 shows the head of the oral irrigator wherein the first and second nozzle pressure have been adjusted to control the position of the collision point; and
Figs. 6A-D show an example jetting sequence according to a proposed embodiment.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Implementations in accordance with the present disclosure relate to various arrangements, adaptations, and/or configurations of a head component for an oral hygiene product pertaining to improving cleaning performance. According to proposed concepts, a number of possible solutions may be implemented separately or jointly. That is, although these possible solutions may be described below separately, two or more of these possible solutions may be implemented in one combination or another.

The invention proposes concepts for aiding and/or improving cleaning from an oral hygiene product for cleaning teeth by emitting a cleaning fluid. In particular, embodiments may provide a system, device and/or method which provides two nozzles that each emit a burst of cleaning fluid to the teeth of the user. Certain operating parameters of each of the two nozzles can be adjusted to permit independent control over the first burst of cleaning fluid emitted by the first nozzle and the second burst of cleaning fluid emitted by the second nozzle. This may allow for the use of the head component to be tailored to the user or otherwise modified to improve the thoroughness and efficiency of the cleaning performance.

The provision of two nozzles enables a greater surface area of the user's teeth and gums to be reached by the cleaning fluid when the device is in use. The proposed invention may therefore reduce the total cleaning time required for efficient cleaning of the user's teeth and gums as in contrast to a head component with a single cleaning nozzle, the user may not need to pass the device along both the facial and lingual surfaces of the teeth.

Being able to independently adjust the operating parameters of the two provided nozzles has the advantage that the properties of the two bursts of cleaning fluid may be controlled separately. This may provide the advantage that the cleaning performance of the device may be adapted for the requirements of the user, for example the positions of the nozzles and directions of the burst of cleaning fluid may be adjusted to account for the specific geometry of the teeth of the user. Interaction between the two jets may also be crucial to cleaning performance. Collisions between the first burst of cleaning fluid and the second burst of cleaning fluid may result in a splashing effect that is beneficial to cleaning performance, resulting in the cleaning fluid reaching a greater surface area of the user's teeth and gums. However, this same splashing effect may be detrimental to cleaning efficacy if the jets are aimed at an interdental space that is narrow and fills up with fluid quickly. Since the operating parameters of the two nozzles of the proposed invention may be independently adjusted, whether or not a collision occurs between the first burst of cleaning fluid from the first nozzle and the second burst of cleaning fluid from the second nozzle may be controlled. Further, the position of any collision that does occur may be controlled and adjusted. This may result in an improved cleaning performance.

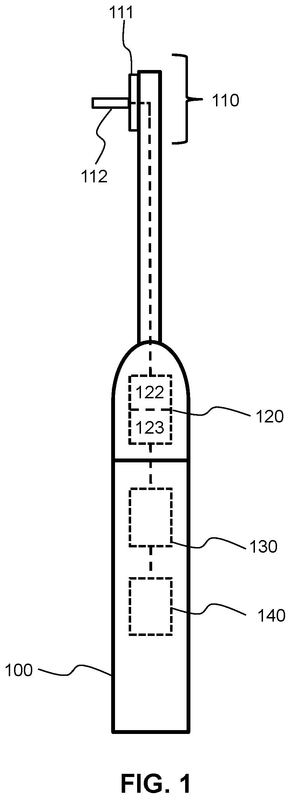

Referring to Fig. 1, there is shown a simplified schematic block diagram of an oral irrigator 100 according to a proposed embodiment. In Fig. 1, the oral irrigator 100 is shown from the side, i.e., Fig. 1 is a side view of the oral irrigator.

The oral irrigator 100 comprises a head component 110 having a support surface 111 supporting (i.e., coupled to) a nozzle 112. The nozzle 111 is configured, in use, to emit a first burst of cleaning fluid to the teeth of the user. The support structure 111 is also coupled to a second nozzle 113 which is not shown in Fig. 1. The second nozzle is configured, in use, to emit a second burst of cleaning fluid to the teeth of the user.

The oral irrigator 100 comprises fluid pumping arrangement 120 that is configured, in use, to pump cleaning fluid from the cleaning fluid reservoir 123 to the nozzles 111 and 112 for emission. The cleaning fluid may be water, mouthwash, or any other suitable fluid. In this exemplary embodiment the pump arrangement 120 comprises a first pump 122 configured to pump cleaning fluid to the first nozzle 112 and a second pump 123 configured to pump cleaning fluid to the second nozzle 113. This pump arrangement may permit independent control of the first burst of cleaning fluid and the second burst of cleaning fluid. Other suitable pumping arrangements that allow for independent control of the fluid pumped to the first nozzle and that pumped to the second nozzle are possible. For example, the pump arrangement may comprise a single pump fitted with a Yjunction connected to the pump at one arm, the first nozzle at a second arm, and the second nozzle at a third arm. A controllable valve may then permit control of the flow of cleaning fluid down the second and third arms of the Y-junction to the first and second nozzles.

The oral irrigator 100 also comprises a processing arrangement 140 (i.e., a control unit 140) configured to control the fluid pumping arrangement 120. The processor 140 may be provided within the device 100, or external to the device 100. When external to the device 100 (i.e., in a smartphone or other smart personal device) there may also be a communication unit (not shown) capable of transmitting control signals/instructions to the processor 140. The processing arrangement 140 may be further configured to control the first set of operating parameters of the first nozzle 112 and the second set operating parameters of the second nozzle 113.

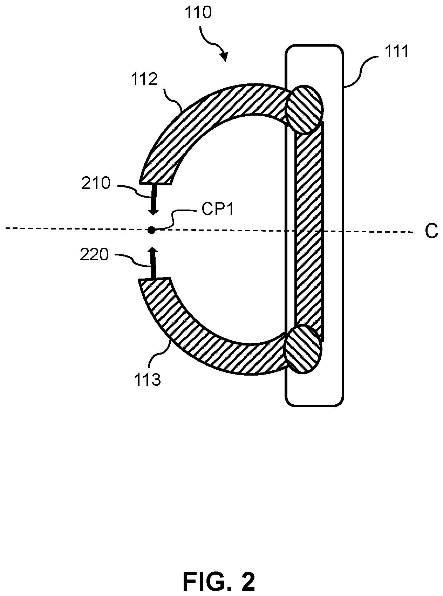

Referring now to Fig. 2, the head component 110 of Fig. 1 is shown in more detail. More specifically, Fig. 2 shows the head component 110 of the oral irrigator of Fig. 1 when viewed form above (i.e., a top view).

The first nozzle 112 is configured to emit, in use, a first burst of cleaning fluid 210 to the teeth of the user. The second nozzle 113 is configured to emit, in use, a second burst of cleaning fluid 220 to the teeth of the user. In this exemplary embodiment, the first and second nozzles are arranged on opposite sides of a central axis C of the head component and arranged in a U- or C-shaped configuration so that, in use the first nozzle and the second nozzle are positioned on either side of a user's tooth. Both the first and second nozzles of the head component 110 are flexible to permit adjustment of their position.

The head component 111 is adapted so that a first set of operating parameters of the first nozzle and a second set of operating parameters of the second nozzle may be adjusted. This allows control over the first burst of cleaning fluid 210 and the second burst of cleaning fluid 220. In this example, the first set of operating parameters comprises at least one of the orientation of the first axis along which the first burst of cleaning fluid is emitted; the first time period (being the time period over which the first burst of cleaning fluid occurs); the first nozzle pressure (being the fluid pressure associated with the first burst of cleaning fluid); and the first fluid velocity (being the velocity at which the first burst of cleaning fluid is emitted). Similarly, the second set of operating parameters comprises at least one of the orientation of the second axis along which the second burst of cleaning fluid is emitted; the second time period (being the time period over which the second burst of cleaning fluid occurs); the second nozzle pressure (being the fluid pressure associated with the second burst of cleaning fluid); and the second fluid velocity (being the velocity at which the second burst of cleaning fluid is emitted).

In this exemplary embodiment, the first and second axes are configured to intersect so that, in use, the first burst of cleaning fluid 210 and the second burst of cleaning fluid 220 collide at a collision point CP1 which lies along the central axis C.

The head component 110 further comprises a first actuator (not shown) configured to adjust a first operating parameter of the first set of operating parameters of the first nozzle, and a second actuator (also not shown) configured to adjust second operating parameter of the second nozzle from the second set of operating parameters. The first and second operating parameters may include the positions of the first and second nozzles, the orientations of the first and second nozzles, and the diameter of the fluid outlets located at the end of each of the nozzles.

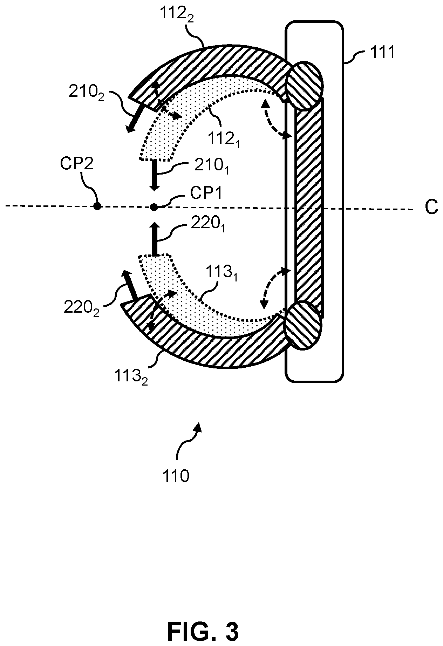

Although in this exemplary embodiment, the nozzles are configured to be positioned on either side of the user's tooth when the head component is used in the mouth of the user, in other embodiments this need not be the case. For example, the two nozzles may be configured to both lie on the facial side of the teeth of the user when the device is in use, which may be result in a more comfortable cleaning experience for the user. Although not shown in Fig. 3, the head component 110 may further comprise a floss wire between the first and second nozzles so both manual flossing and water irrigation are provided. The presence of a floss wire may also aid the user in positioning the head component such that the first and second burst of cleaning fluid are directed towards the interdental space.

Similarly other aspects of the head component 110 may be implemented differently in different embodiments. For example, the first and second nozzle need not be flexible. In other embodiments, the nozzles may be rigid and adjustment of the orientation of the first and second axes achieved by rotation and translation of the entire nozzle structure. The first and second actuators need not be included, and adjustment of the first and second set of operating parameters may be carried out manually by the user.

Referring now to Fig 3., there is depicted the head component 110 wherein the orientation of the first and second axes have been adjusted to control the position of the collision point. The dotted line reproduction of the nozzles 112₁ and 113₁, shows a first configuration of the head component where the first axes and the second axis are configured to intersect at the collision point CP1. The solid line reproduction of the nozzles 112₂ and 113₂, shows a second configuration of the head component wherein the orientation of the first and second axes have been adjusted to move the intersection point between the first and second axes to a point CP2 which is different from the collision point CP 1. This may be achieved by rotation or deformation of the nozzles 112 and 113 by the first and second actuators.

Movement of the collision point in this way allows different areas of the user's teeth and gums to be targeted for cleaning. For example, if the nozzles are configured so that in use the first burst of cleaning fluid and the second burst of cleaning fluid are directed towards an interdental space of the user, movement of the collision point within the interdental space may increase the total interdental surface that is cleaned.

Although in this exemplary embodiment, the collision point is moved to another point along the central axis C, in other embodiments the first and second axes may be adjusted so that the collision point is adjusted to a point off the central axis C. This may enable an even larger area of the user's teeth and gums to be cleaned.

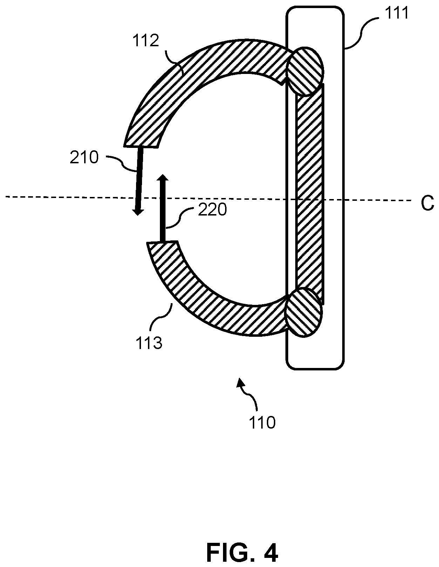

Fig. 4 shows the head component 110 wherein the first and second set of operating parameters have been adjusted such that, in use, the first burst of cleaning fluid 210 and the second burst of cleaning fluid 220 do not collide. In this exemplary embodiment, the first nozzle is configured to emit the first burst of cleaning fluid 210 along a first axis, and the second nozzle is configured to emit the second burst of cleaning fluid 220 along a second axis. The orientations of the first and second axes have been adjusted independently to control the directions in which the first and second bursts of cleaning fluid are emitted, such that there is no collision between the first and second bursts of cleaning fluid. In this exemplary embodiment, this is achieved by a lateral offset between the first axis and the second axis such that they do not intersect. This configuration may be beneficial to cleaning performance when the cleaning bursts are directed towards a narrow interdental space.

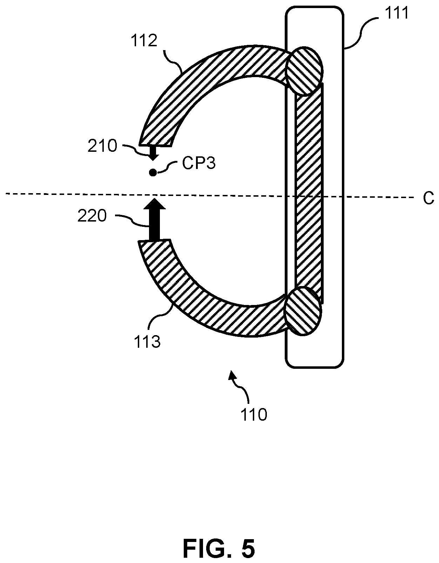

Fig. 5, shows the head component 110 wherein the first nozzle is configured to emit the first burst of cleaning fluid 210 along a first axis, and the second nozzle is configured to emit the second burst of cleaning fluid 220 along a second axis, wherein the first and second axes are configured to intersect such that the first burst of cleaning fluid and the second burst of cleaning fluid collide at a collision point CP3. In this example the second nozzle pressure has been adjusted to be greater than the first nozzle pressure such that the collision point CP3 is now positioned off the central axis C and lies closer to the emitting end of the first nozzle than to the emitting end of the second nozzle. Adjustment in this manner may be beneficial for adapting the operation of the head component to account for the specific geometry of the teeth and gums of the user.

Figs. 3-5 depict three possible adjustments to the first set of operating parameters and the second set of operating parameters to control the first burst of cleaning fluid and the second burst of cleaning fluid. Each resulting jet configuration may have improved cleaning performance in different scenarios. It will be understood that many other adjustments to the first and second sets of operating parameters are possible. For example, adjusting the position of the collision point to the point CP3 as shown in Fig. 5 may not involve adjustment of the first and second nozzle pressures, but may instead involve adjustment of the orientations of the first and second nozzles or the first and second fluid velocities. Similarly, controlling the first and second burst of cleaning fluid such that they do not collide may not involve producing a positional offset between the jets as shown in Fig. 4 but may instead involve a temporal offset between the first burst of cleaning fluid and the second burst of cleaning fluid i.e., the first time period and the second time period may be adjusted such that they do not overlap. Further, adjustment of the first and second time period such that they overlap but are nonetheless offset from one another, may result in the control of the position of a collision point between the first burst of cleaning fluid and the second burst of cleaning fluid.

One possible application of the proposed invention are jetting sequences. The proposed invention permits independent adjustments to the operating parameters of each of the nozzles to be made in a time sequential manner to produce a sequence of different cleaning burst configurations. The resulting jetting sequence may result in an improved clean that reaches more areas of the surfaces of the teeth and gums of the user, without requiring manual manipulation of the device by the user.

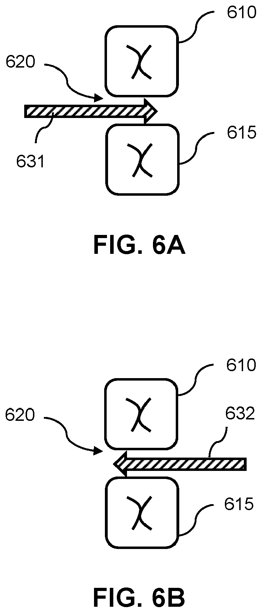

Figs. 6A to 6D show one possible jetting sequence that may be implemented using the head component 110 to achieve thorough interdental cleaning. The head component 110 is configured so that, in use, the first nozzle 112 is adjacent to the lingual side of the teeth of the user and the second nozzle 113 is adjacent to the facial/buccal side of the teeth of the user. The head component may be positioned in the user's mouth such that the first and second nozzles are positioned on either side of the interdental space 620 between two teeth of the user 610 and 615.

Fig. 6A depicts the jetting sequence at a first time t₁. A first burst of cleaning fluid 631 is emitted to the teeth of the user along a first axis from the first nozzle 112. This is directed towards the interdental space 620 between the teeth 610 and 615 from the lingual side of the user's teeth. In the time interval t₁ no fluid is emitted from the second nozzle 113.

Fig. 6B depicts the jetting sequence at a second time t₂ which occurs after the time t₁. A second burst of cleaning fluid 632 is emitted to the teeth of the user along a second axis from the second nozzle 113 of the head component 110. This is directed towards the interdental space 620 from the facial/buccal side of the user's teeth.

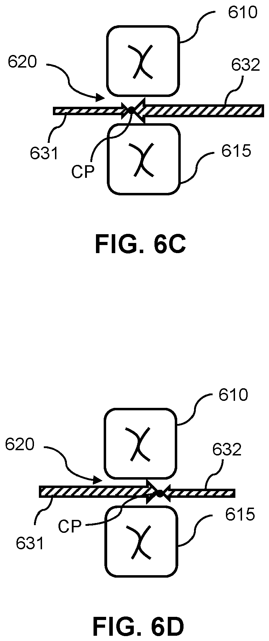

Fig. 6C depicts the jetting sequence at a third time t₃ which occurs after the time t₂. At the time t₂ both the first nozzle and the second nozzle emit burst of cleaning fluid towards the interdental space 620. The first nozzle emits the first burst of cleaning fluid 631 along a first axis and the second nozzle emits the second burst of cleaning fluid 632 along a second axis. The first and second axis are configured to intersect such that the first burst of cleaning fluid 631 and the second burst of cleaning fluid 632 collide at a collision point CP. At the time t₃, the first nozzle pressure is adjusted to be less than the second nozzle pressure such that the collision point CP is positioned closer to the lingual side of the user's teeth than the facial/buccal side.

Fig. 6D depicts the jetting sequence at a fourth time t₄ which occurs after the time t₃. At the time t₄, the first nozzle and second nozzle pressures have been adjusted such that the collision point CP lies closer to the facial/buccal side of the user's teeth than the lingual side. In this way, the cleaning at time t₄ may be focused on the facial/buccal side of the interdental space.

Figs. 6A-D depict one possible jetting sequence that may be implemented using the proposed head component for an oral hygiene product which may result in optimal interdental cleaning.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage. If the term "adapted to" is used in the claims or description, it is noted the term "adapted to" is intended to be equivalent to the term "configured to". Any reference signs in the claims should not be construed as limiting the scope.

## Claims

1. A head component (110) for an oral hygiene product for cleaning teeth of a user by emitting a cleaning fluid, wherein the head component comprises:
a support structure (111);
a first nozzle (112) coupled to the support structure, the first nozzle configured, in use, to emit a first burst of cleaning fluid (210) to the teeth of the user; and
a second nozzle (113) coupled to the support structure, the second nozzle configured, in use, to emit a second burst of cleaning fluid (220) to the teeth of the user,
wherein the head component is adapted to permit adjustment of a first set of operating parameters of the first nozzle and a second set of operating parameters of the second nozzle to independently control the first burst of cleaning fluid and the second burst of cleaning fluid.

2. The head component of claim 1, wherein the first nozzle is configured, in use, to emit the first burst of cleaning fluid along a first axis and the second nozzle is configured, in use, to emit the second burst of cleaning fluid along a second axis, and
wherein the first and second axes are configured to intersect so that, in use, the first burst of cleaning fluid and the second burst of cleaning fluid collide at a collision point (CP).

3. The head component of claim 2, wherein independently controlling the first burst of cleaning fluid and the second burst of cleaning fluid comprises:
adjusting the first and second set of operating parameters to control the position of the collision point.

4. The head component of any preceding claim, wherein independently controlling the first burst of cleaning fluid and the second burst of cleaning fluid comprises:
adjusting the first and second set of operating parameters so that the first and second bursts of cleaning fluid do not collide.

5. The head component of any preceding claim, wherein the first nozzle is configured, in use, to emit the first burst of cleaning fluid along a first axis, and
wherein the first set of operating parameters comprises at least one of:
the orientation of the first axis;
a first time period being the time period over which the first burst of cleaning fluid occurs;
a first nozzle pressure being the fluid pressure associated with the first burst of cleaning fluid; and
a first fluid velocity being the velocity at which the first burst of cleaning fluid is emitted.

6. The head component of any preceding claim, wherein the second nozzle is configured, in use, to emit the second burst of cleaning fluid along a second axis, and
wherein the second set of operating parameters comprises at least one of:
the orientation of the second axis;
a second time period being the time period over which the second burst of cleaning fluid occurs;
a second nozzle pressure being the fluid pressure associated with the second burst of cleaning fluid; and
a second fluid velocity being the velocity at which the second burst of cleaning fluid is emitted.

7. The head component of any preceding claim, wherein the first nozzle and the second nozzle are arranged on opposite sides of a central axis C of the head component.

8. The head component of any preceding claim, wherein the first nozzle and the second nozzle are arranged in a U- or C-shaped configuration so that, in use, the first nozzle and second nozzle are adapted to be positioned on either side of a user's tooth.

9. The head component of any preceding claim, wherein the first nozzle and the second nozzle are flexible to permit adjustment of their positions.

10. The head component of any preceding claim, wherein the head component further comprises at least one of:
a first actuator configured to adjust a first operating parameter of the first set of operating parameters; and
a second actuator configured to adjust a second operating parameter of the second set of operating parameters,
preferably wherein the first and second operating parameters comprise at least one of: a position; an orientation; and a diameter of a fluid outlet located at the end of the first and second nozzles respectively.

11. The head component of any preceding claim, wherein the head component further comprises a floss wire.

12. An oral hygiene product (100) for cleaning teeth by emitting a cleaning fluid, the oral hygiene product comprising a head component according to any of claims 1-11.

13. The oral hygiene product of claim 12, further comprising:
a cleaning fluid reservoir (130); and
a pump arrangement (120) configured to pump cleaning fluid from the fluid reservoir to the first and second nozzles of the head component.

14. The oral hygiene product of claim 13, wherein the pump arrangement comprises:
a first pump (122) to pump cleaning fluid to the first nozzle; and
a second pump (123) to pump cleaning fluid the second nozzle.

15. The oral hygiene product of claim 13, wherein the pump arrangement comprises:
a pump;
a Y-junction connected to the pump at one arm, the first nozzle at a second arm, and the second nozzle at a third arm; and
a controllable valve permitting control of the flow of the cleaning fluid down the second arm and third arm of the Y-junction.
